# EUROPÄISCHE PATENTSCHRIFT

(11) **EP 3 556 549 B1**
(45) Veröffentlichungstag und Bekanntmachung des Hinweises auf die Patenterteilung: **16.09.2020**
(21) Anmeldenummer: 18167554.7
(22) Anmeldetag: 16.04.2018
(51) Int. Cl.: B32B 5/02, B32B 5/26, B32B 5/30, B32B 7/12, B32B 21/06, B32B 21/10, B32B 27/06, B32B 29/00

(54) **TRÄGERMATERIAL FÜR KUNSTHARZ**
SUBSTRATE FOR SYNTHETIC RESIN
MATÉRIAU SUPPORT POUR RÉSINE SYNTHÉTIQUE

(43) Veröffentlichungstag der Anmeldung: 23.10.2019
(73) Patentinhaber: SWISS KRONO Tec AG, 6004 Luzern (CH)
(72) Erfinder: Kalwa, Norbert, 32805 Horn-Bad Meinberg (DE)
(74) Vertreter: Kalkoff & Partner Patentanwälte PartmbB

(56) Entgegenhaltungen:
- EP-A1- 3 118 015
- EP-A2- 1 977 909

## Beschreibung

Die Erfindung betrifft ein Trägermaterial für Kunstharz und ein Verfahren zum Herstellen des Trägermaterials für Kunstharz.

Die WO 2016/026801 A1 und die EP 1977 909 A2 beschreiben das Herstellen einer Verbundplatte aus z. B. einer OSB-Platte und einer Faserplatte unter Verwendung eines kunstharzgetränkten Papiers.

Beim Herstellen einer Verbundplatte aus einer Mittellage und einer Außenlage, so wie in der WO 2016/026801 A1 geschildert, können jedoch nur Außenlagen von begrenzter Dicke eingesetzt werden. Bei zu dicken Außenlagen genügt die Menge an Kunstharz, die in bzw. auf das Papier aufgebracht werden kann, nicht. Es ist also ein Trägermaterial für Kunstharz bereitzustellen, das es ermöglicht, ausreichend Kunstharz aufzubringen, um z. B. auch eine dicke Außenlage mit einer Mittellage zu einer Verbundplatte zu verbinden.

Diese Aufgabe wird gelöst mit einem Trägermaterial nach Anspruch 1 und mit einem Verfahren zum Herstellen des Trägermaterials nach Anspruch 11. Bevorzugte Ausführungsformen sind in den abhängigen Ansprüchen definiert.

Das erfindungsgemäße Trägermaterial weist ein mindestens einseitig aufgebrachtes Fixiermittel auf, auf das ein partikelförmiges Kunstharz aufgebracht ist.

Das erfindungsgemäße Trägermaterial wird typisch zum Herstellen einer Verbundplatte oder alternativ auch zum Armieren der Außenseite einer Platte eingesetzt. Bei einer Armierung wird das Trägermaterial auf die Außenseite einer Platte aufgebracht, z. B. um im Bereich der Außenseite die Festigkeitseigenschaften zu verbessern, ohne dass zwingend eine Außenlage aufgebracht wird. Bei Verbundplatten wird auf mindestens einer Seite mittels des Trägermaterials eine Außenlage auf eine Mittellage aufgebracht.

Die Platte bzw. die Verbundplatte weist eine Mittellage auf, die bevorzugt aus Holz oder Holzwerkstoff besteht, insbesondere aus einer Span- oder Faserplatte einschließlich Oriented Strand Board (OSB-Platte), einer hochdichten oder mitteldichten Faserplatte (HDF- oder MDF-Platte) oder aus Sperrholz; sie können aber auch aus beliebigem plattenförmigem Werkstoff wie Glas, Metall, keramischem oder mineralischem Werkstoff hergestellt sein, z. B. zement- oder gipsgebundene Spanplatten. Die Außenlage der Verbundplatte ist bevorzugt eine HDF- oder MDF-Platte, ein Furnier, ein Gewebe, ein Gelege oder ein Gewirke, eine Platte aus Glas, Kunststoff, Metall oder aus einem keramischen oder mineralischen Werkstoff. Nach einer weiteren Ausführung der Erfindung kann als Außenlage eine Kombination von Schichten aus unterschiedlichen Werkstoffen eingesetzt werden, z. B. eine Außenlage aus MDF oder HDF, die die technischen Eigenschaften der Verbundplatte verbessern, wobei die der Mittellage abgewandte Außenseite dieser Außenlage mit einem dekorativen Werkstoff, z. B. einem Vlies, einer Tapete, einem Furnier, einer Folie, einem Schichtstoff oder dergleichen beschichtet ist.

Das erfindungsgemäße Trägermaterial ist ein Gelege bzw. ein Vlies, insbesondere ein Vlies aus natürlichen oder aus synthetischen Fasern, z. B. ein Papier oder ein Vlies aus Kunststofffasern oder Carbonfasern. Gut geeignet sind auch Gelege aus einem Gemisch von verschiedenen synthetischen Fasern oder natürlichen Fasern oder ein Gemisch aus natürlichen und synthetischen Fasern. Daneben eignen sich erfindungsgemäß auch Gewebe, Gewirke oder Folien. Bevorzugt wird ein Trägermaterial eingesetzt, das 0,01 mm bis 1 mm dick ist, bzw. das ein Flächengewicht von 20 g/m2 bis 300 g/m2 aufweist. Es kann sich um ein einlagiges oder um ein mehrlagiges Trägermaterial aus gleichem oder verschiedenem Material handeln.

Das Fixiermaterial dient dazu, das partikelförmige Kunstharz am Trägermaterial zu binden. Als Fixiermaterial wird also ein Material eingesetzt, das, bezogen auf das partikelförmige Kunstharz, aber auch auf das Trägermaterial, haftende Eigenschaft zeigt. Es können Klebstoffe oder Bindemittel eingesetzt werden, bevorzugt werden jedoch Kunstharze, insbesondere duroplastische Kunstharze eingesetzt. Mindestens wird das meist flüssige Fixiermittel auf einer Seite des Trägermaterials aufgetragen, z. B. angespült, aufgesprüht, aufgewalzt, aufgestrichen oder aufgegossen. Ein einseitig mit Fixiermittel versehenes Trägermaterial wird vorteilhaft zum Armieren einer Mittellage eingesetzt.

Besonders vorteilhaft wird das Fixiermittel jedoch aufgetragen, indem das Trägermaterial durch ein Tränkbad mit dem flüssigen Fixiermittel, insbesondere mit einem duroplastischen Kunstharz als Fixiermittel gezogen wird. Wenn das Trägermaterial über die Oberfläche des flüssigen Fixiermittels geführt wird, kann auch im Tränkbad eine einseitige Beschichtung mit Fixiermittel erfolgen. Das flüssige Fixiermittel beschichtet aber vorteilhaft beide Seiten des Trägermaterials, ggf. dringt es auch in ein poröses Trägermaterial wie ein Vlies, insbesondere ein Papier ein und tränkt es, wenn das Trägermaterial durch das flüssige Fixiermittel hindurch gezogen wird. Falls erforderlich, kann überschüssiges Fixiermittel nach dem Tränkbad durch Abstreifer entfernt werden. Ein beidseitig mit Fixiermittel versehendes Trägermaterial kann auf der einen Seite mit einem beliebigen Substrat verbunden werden, auf der anderen Seite dient das Fixiermittel zum Fixieren von partikelförmigem Kunstharz. Der besondere Vorteil des beidseitigen Auftrags des Fixiermittels liegt unter anderem darin, dass mit einem einzigen Fixiermittel sowohl die Verbindung des Trägermittels mit einem Substrat, das als Mittellage eingesetzt wird, z. B. mit einer Holzwerkstoffplatte auf der einen Seite als auch die Verbindung mit einer Außenlage auf der anderen Seite gewährleistet wird.

Erfindungsgemäß wird partikelförmiges Kunstharz auf das Fixiermittel aufgebracht. Das partikelförmige Kunstharz ist bevorzugt ein duroplastisches Kunstharz. Typische duroplastische Kunstharze sind z. B. Harnstoff-, Melamin-, Phenol-, Epoxydharz sowie deren Mischungen und Derivate. Das partikelförmige Kunstharz liegt für gewöhnlich in getrockneter, aber noch reaktiver Form vor. Die Partikel können z. B. durch Sprühtrocknen hergestellt werden. Die Partikel weisen bevorzugt einen Durchmesser von 0,001 mm bis zu 1 mm auf. Das partikelförmige Kunstharz wird vorteilhaft in einer Menge von 10 g/m2 bis 250 g/m2 aufgetragen. Nach einer weiteren vorteilhaften Ausführung wird das partikelförmige Kunstharz in einer Schichtdicke von 10 µm bis zu 300 µm aufgetragen.

Das partikelförmige Kunstharz wird nicht in wässriger Lösung, sondern als Feststoff eingesetzt. Entsprechend wird keine unerwünschte Flüssigkeit durch den partikelförmigen Kunststoff in eine Verbundplatte oder durch die Armierung in eine Mittellage eingetragen. Der besondere Vorteil des Einsatzes von partikelförmigem Kunstharz ist darin zu sehen, dass, insbesondere wenn das Fixiermittel bereits in großer Menge auf das Trägermaterial aufgetragen ist, zusätzliches, ebenfalls fixierend wirkendes Kunstharz aufgebracht werden kann, das die Bindungskräfte des Trägermaterials weiter erhöht. Zudem erfolgt die Erhöhung der Klebkraft ohne Zusatz weiterer Flüssigkeit, insbesondere Wasser. Dies hat zweierlei Vorteile. Zum einen kann in einer Imprägnieranlage auf einen Träger nicht eine beliebige Harzmenge aufgebracht und getrocknet werden. Die Harzmenge kann also ohne Feuchtigkeitszusatz erhöht werden, wenn partikelförmiges Kunstharz aufgebracht wird. Zum anderen enthalten die Harze nach dem Trocknen noch eine definierte Restfeuchte, die von der absoluten Menge her umso höher ist, je höher der Harzauftrag ist. Diese Wassermenge kann bei hohen Harzaufträgen bei Verpressungen zu einem Dampfdruck führen, der das Gefüge zerstört. Auch hier wirkt sich der Zusatz von partikelförmigem Kunstharz verbessernd aus, weil durch die Partikel des Kunstharzes der Eintrag von Wasser weitgehend reduziert wird.

Dieser besondere Vorteil der Erfindung ermöglicht es, auch dickere Außenlagen mit einer Mittellage zu einer Verbundplatte zu verbinden, weil mehr Kunstharz während des Verpressens verflüssigt werden kann, wenn die Verbundplatte z. B. in einer Kurztaktpresse (KT-Presse) hergestellt wird. Das Kunstharz, sowohl das partikelförmige als auch optional das als Fixiermittel eingesetzte Kunstharz wird unter Druck und bei erhöhter Temperatur verflüssigt und dringt in die aufzubringende Außenlage ein, so dass eine feste Verbindung zwischen Mittellage und Außenlage erzeugt wird, sobald das Kunstharz nach Verlassen der Presse abkühlt. Wird das Trägermaterial als Armierung eingesetzt, dringt ebenfalls ein erhöhter Anteil von Kunstharz in die Mittellage ein und verbessert die armierende Wirkung des Trägermaterials.

Das partikelförmige Kunstharz lässt sich dabei genauso verarbeiten wie ein optional als Fixiermittel eingesetztes Kunstharz. Insbesondere bei dickeren Außenlagen, die z. B. eine Schichtstärke von 3 mm bis 6 mm aufweisen, erweist es sich als vorteilhaft, eine größere Menge an Kunstharz verfügbar zu haben, als es bisher möglich war. Es kann damit mehr Kunstharz als bisher in die Außenlage bzw. bei einer Armierung in die Mittellage penetrieren, so dass die Verbindung zwischen Trägermaterial und Außen- bzw. Mittellage im Falle der Armierung verbessert wird. Damit können auch Außenlagen größerer Dicke zuverlässig mit einer Mittellage zu einer Verbundplatte verbunden, insbesondere verpresst werden. Durch die größere Menge an Kunstharz können auch Oberflächenunebenheiten, z. B. Lunker, ausgeglichen werden. Durch die gezielt einstellbare Asymmetrie des Trägermaterials, die durch das Aufbringen von partikelförmigem Kunstharz erzeugt wird, kann somit gut dem unterschiedlichen Saugverhalten von Mittellage und Außenlage Rechnung getragen werden und das gewünschte Verklebungsergebnis kann gezielt eingestellt werden.

Typische Verarbeitungsbedingungen für das Kunstharz, z. B. in einer KT-Presse, sind eine Pressdauer von 20 Sekunden bis 60 Sekunden, eine Presstemperatur von 160 °C bis 200 °C und ein Pressdruck, der 25 N/mm2 bis 50 N/mm2 beträgt.

Die Erfindung umfasst weiter ein Verfahren zum Herstellen eines Trägermaterials, das ein Fixiermittel und partikelförmiges Kunstharz aufweist, mit den Schritten:
- Bereitstellen des Trägermaterials,
- Aufbringen des Fixiermittels,
- Aufbringen, insbesondere Aufstreuen des partikelförmigen Kunstharzes.

Das erfindungsgemäße Trägermaterial wird meist als endloses Band zur Verfügung gestellt, das zum Aufbringen des Fixiermittels abgerollt und nach Aufbringen des Fixiermittels entweder wieder aufgerollt oder zu Bogen geschnitten wird.

Das Aufbringen des Fixiermittels kann auf beliebige Weise erfolgen. Beispielsweise sind zu nennen das Anspülen, Aufsprühen, Aufstreichen, Gießen, Rakeln oder Tauchen. Bevorzugt wird das Trägermaterial durch ein Tauchbad mit flüssigem Fixiermittel geführt. Damit wird das Trägermaterial in der Regel getränkt bzw. beidseitig beschichtet, obwohl ein Führen des Trägermaterials über die Oberfläche des Fixiermittels auch eine einseitige Beschichtung ermöglicht. Ein eventueller Überschuss kann durch Abstreifer nach dem Tauchbad beseitigt werden. Dadurch kann das Fixiermittel in vorgegebener Menge aufgebracht werden.

Wird als Fixiermittel ein Kunstharz eingesetzt, so kann das Trägermaterial nur eine bestimmte Menge an Fixiermittel aufnehmen, entsprechend ist die Bindekraft limitiert. Außenlagen mit größerer Dicke können also nicht zum Herstellen einer Außenlage eingesetzt werden, weil die Menge an Kunstharz im bzw. auf dem Trägermaterial nicht ausreicht, um eine feste Verbindung zwischen Mittellage und Außenlage herzustellen.

Nach dem Aufbringen des Fixiermittels erfolgt das Aufbringen des partikelförmigen Kunstharzes. Es wird meist aufgestreut. Bevorzugt wird das partikelförmige Kunstharz in das noch feuchte Fixiermittel gestreut oder gesprüht, denn die Haftung ist dann umso besser. Optional kann das partikelförmige Kunstharz jedoch auch auf andere Weise am Fixiermittel fixiert werden, z. B. durch eine Walze, die das aufgestreute oder aufgesprühte partikelförmige Kunstharz an das Fixiermittel andrückt bzw. es in das Fixiermittel hineindrückt.

Gemäß einer weiter verbesserten Ausführungsform wird das Trägermaterial mit dem Fixiermittel und dem partikelförmigen Kunstharz anschließend getrocknet, zum einen, um es transportfähig zu machen und zum anderen, um so wenig Flüssigkeit, insbesondere Wasser in dem Trägermaterial zu belassen wie möglich, um z. B. das nachfolgende Verpressen so einfach wie möglich zu gestalten.

Das Herstellen des erfindungsgemäßen Trägermaterials ist also besonders einfach und erfordert nicht mehr als das Einsetzen einer Streu- oder Sprühvorrichtung in eine an sich bekannte Anlage zum Herstellen des bekannten, mit einem Fixiermittel versehenen Trägermaterials.

Mit dem erfindungsgemäßen Trägermaterial können sämtliche erforderlichen Manipulationen wie z. B. Schneiden, Besäumen, Aufrollen, Stapeln etc. vorgenommen werden.

Details der Erfindung werden nachfolgend an Ausführungsbeispielen näher erläutert. Es zeigen:
- Fig. 1: schematische, nicht-maßstäbliche Darstellung einer Ausführung des erfindungsgemäßen Trägermaterials
- Fig. 2: schematische, nicht-maßstäbliche Darstellung einer Ausführung einer Verbundplatte mit dem erfindungsgemäßen Trägermaterial.

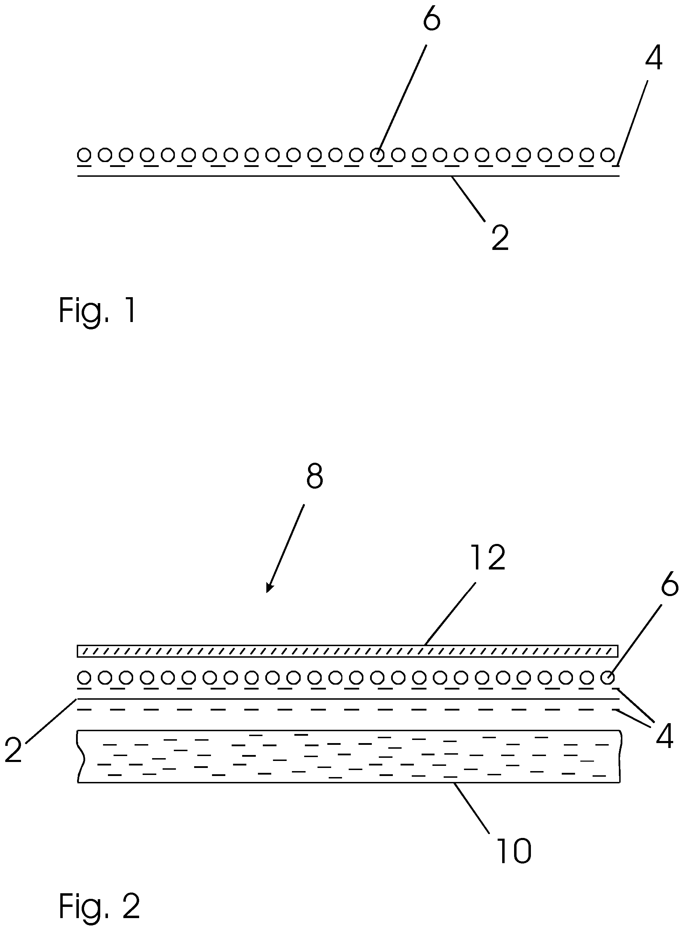

Eine Ausführung des erfindungsgemäßen Trägermaterials wird in Fig. 1 in einer einfachen Ausführung dargestellt. Auf ein Trägermaterial 2, ein Vlies, insbesondere ein Papier oder ein anderes der vorgenannten Trägermaterialien, wird nach der Darstellung in Fig. 1 einseitig ein Fixiermittel 4, hier ein Klebstoff oder ein Kunstharz, aufgetragen. Alternativ kann, wie in den nachstehenden Ausführungsbeispielen beschrieben, das Fixiermittel auch beidseitig aufgetragen werden. Das Fixiermittel wird vorzugsweise in flüssiger Form aufgebracht, z. B. durch Anspülen, Streichen, Rakeln, Sprühen, Tauchen oder Walzen. Anschließend wird partikelförmiges Kunstharz 6, insbesondere ein duroplastisches Kunstharz wie Melaminharz oder eines der anderen vorstehend genannten Kunstharze aufgestreut. Optional kann das partikelförmige Kunstharz 6 auch mittels einer Walze besser mit dem Fixiermittel 4 in Verbindung gebracht werden. Bevorzugt wird das mit einem Fixiermittel 4 und partikelförmigem Kunstharz 6 versehene Trägermaterial 2 anschließend getrocknet und ggf. konfektioniert, z. B. zu Bogen geschnitten.

Fig. 2 zeigt in schematischer und nicht-maßstäblicher Darstellung eine Verbundplatte 8, aufweisend eine Mittellage 10 aus einer Platte, meist eine Holzwerkstoffplatte wie eine Span- oder Faserplatte, aber auch eine Platte aus einem der vorstehend genannten Werkstoffe. Auf eine Seite der Mittellage 10 ist das Trägermaterial 2 aufgelegt, hier ein mit flüssigem Fixiermittel 4 getränktes bzw. beidseitig beschichtetes Trägermaterial. Als Fixiermittel 4 wird bevorzugt ein duroplastisches Kunstharz wie Melaminharz oder ein anderes der vorstehend genannten Fixiermittel aufgebracht. Auf eine Seite des mit flüssigem Fixiermittel 4 getränkten Trägermaterials 2 wird partikelförmiges Kunstharz 6, insbesondere partikelförmiges, duroplastisches Kunstharz, aufgebracht. Das mit partikelförmigem Kunstharz 6 bestreute und mit Fixiermittel 4 versehene Trägermaterial 2 wird dann getrocknet und als getrocknetes Trägermaterial 2 auf die Mittellage 10 aufgelegt. Auf das Trägermaterial 2 wird die Außenlage 12 aufgelegt, hier z. B. eine HDF-Platte von 3 mm Stärke oder eine andere der vorstehend genannten Außenlagen einschließlich der mehrlagigen Außenlagen. Dabei ist die Seite des Trägermaterials 2, die mit partikelförmigem Kunstharz 6 versehen ist, von der Mittellage 10 abgewandt und der Außenlage 12 zugewandt. Der so geschichtete Pressgutstapel wird in einer KT-Presse bei 190 °C für 35 Sekunden und bei einem Druck von 30 N/mm² zu einer Verbundplatte verpresst.

### Ausführungsbeispiel 1

Ein ungefülltes 25 g/m² schweres Papier, ein so genanntes Overlay, wird als Trägermaterial eingesetzt und mit einem Fixiermittel, hier: Melaminharz (Feststoffgehalt: 58 Gew.-%) beidseitig getränkt, indem das Overlay durch ein Tränkbad mit flüssigem Melaminharz geführt wird. Das Melaminharz, ein duroplastisches Kunstharz, wird in einer Menge aufgetragen, dass nach dem Trocknen auf eine Restfeuchte von 6 Gew.-% das Gewicht des getränkten Overlays 150 g/m² beträgt. Es werden also, bezogen auf das Gewicht des Overlays, 500 % Fixiermittel aufgebracht.

Nach dem Tränkbad werden auf eine Seite des noch feuchten Overlays zusätzlich 120 g/m² partikelförmiges Melaminharz, sogenanntes Melaminharz-Pulver in das noch feuchte Fixiermittel gestreut. Diese weitere Menge an Melaminharz hätte nicht mehr in flüssiger Form auf das Overlay aufgetragen werden können.

Das mit flüssigem Melaminharz als Fixiermittel getränkte Overlay, auf dessen eine Seite partikelförmiges Melaminharz gestreut wurde, wird dann in einem Schwebetrockner getrocknet bis auf eine Restfeuchte von 6 Gew.-%. Das mit Fixiermittel versehene und zusätzlich mit partikelförmigem Kunstharz bestreute, getrocknete Trägermaterial wird dann in Bogen geschnitten, deren Größe mit der Größe der Pressbleche einer KT-Presse abgestimmt ist.

Ein Bogen des wie vorstehend beschrieben hergestellten Trägermaterials wird auf der mit pulverförmigem Kunstharz versehenen Seite mit roter Farbe eingesprüht. Das so präparierte Trägermaterial wird auf eine HDF-Platte aufgelegt, die als Mittellage dient. Auf das Trägermaterial wird als Außenlage ein 0,6 mm dickes Buchenfurnier (Flächengewicht: 260 g/m²) aufgelegt. Der so hergestellte Pressgutstapel wird in einer KT-Presse bei 165 °C und einem Druck von 30 N/mm² über eine Pressdauer von 60 Sekunden zu einer Verbundplatte verpresst.

Nach dem Öffnen der Presse lässt sich an der roten Oberfläche des Buchenfurniers eine gute Penetration der Außenlage durch das ursprünglich partikelförmig aufgetragene, in der KT-Presse verflüssigte Melaminharz erkennen. Auch das Fixiermittel wird anteilig in das Furnier eingedrungen sein, es hätte jedoch wegen der geringeren Menge keine so vollständige Penetration bewirken können.

An dem Muster wurde in Anlehnung an die DIN EN 13329 das Verhalten gegenüber Abriebbeanspruchung geprüft. In der Tabelle ist die Anzahl der Umdrehungen (Um.) angegeben. Zum Vergleich wurde ein Furnier der gleichen Ausgangsstärke mitgeprüft, das mit einem Klebestreifen auf einen Träger aufgeklebt war.

| Probe | Imprägniert | Vergleich |
|---|---|---|
| Verhalten gegenüber Abriebbeanspruchung | 1400 Um. | 600 Um. |

Wie aus den Prüfergebnissen zu entnehmen ist, wird das Ergebnis des Verhaltens gegenüber Abriebbeanspruchung durch die Harzimprägnierung deutlich erhöht.

### Ausführungsbeispiel 2

Ein Bogen des Trägermaterials aus dem Ausführungsbeispiel 1 wurde auf der mit partikelförmigem Kunstharz beschichteten Seite auf eine OSB-Platte mit geschliffener Oberfläche gelegt, die als Mittellage eingesetzt wurde. Trotz des Schleifens weist die aus großflächigen und verhältnismäßig dicken Spänen aufgebaute OSB-Platte in ihrer Oberfläche noch Lunker (Lücken, flache Löcher zwischen den einzelnen Spänen) auf. Auf das Trägermaterial wird eine 3,5 mm dicke Pappe (Flächengewicht: 913 g/m²) als Außenlage aufgelegt. Unter der OSB-Platte wird ein mit einem Phenolharz imprägniertes Natronkraftpapier als Gegenzug angeordnet. Dieser Pressgutstapel wird unter den folgenden Bedingungen zu einer Verbundplatte verpresst. Der so hergestellte Pressgutstapel wird in einer KT-Presse bei 200 °C und einem Druck von 50 N/mm² über eine Pressdauer von 40 Sekunden zu einer Verbundplatte verpresst. Nach dem Öffnen der KT-Presse waren auf der Oberfläche der Verbundplatte keine Lunker mehr zu erkennen und die Haftung der Pappe als Außenlage der Verbundplatte war gut. Das pulverförmige, in der KT-Presse verflüssigte Melamin hat die Lunker offenbar ausgefüllt, so dass die Pappe auf einer ebenen bzw. geebneten Oberseite der OSB-Platte verpresst werden konnte. Die Pappe war auf 1,3 mm verdichtet worden. Die Haftung der Pappe auf der OSB war überall gut. Ein Harzaustritt auf der Oberseite war nicht beobachtbar. Die Platten wurden anschließend mit Nut und Feder versehen, wobei als Bezugsebene die Oberseite mit der Pappe diente. Die Platten wurden anschließend probeweise auf einer Holzunterkonstruktion montiert und die Plattenübergänge gespachtelt. Danach wurde die Pappe grundiert und tapeziert. Die Tapete zeigte nach dem Trocknen des Leims eine gute Haftung zur Pappe.

### Ausführungsbeispiel 3

Ein Bogen des Trägermaterials aus dem Ausführungsbeispiel 1 wird auf eine geschliffene HDF-Platte gelegt, die als Mittellage dient. Dabei weist die mit partikelförmigem Kunstharz beschichtete Seite nach außen, also von der HDF-Platte weg. Auf das Trägermaterial wird ein Glasvlies mit einem Gewicht von 150 g/m² gelegt. Die Fasern des Glasvlieses weisen einen Durchmesser von ca. 30 µm bis 40 µm auf. Auf das Glasvlies wird ein mit Melaminharz imprägniertes Dekorpapier und darauf ein ebenfalls mit Melaminharz imprägniertes Overlay aufgelegt. Die Außenlage ist in diesem Fall also mehrlagig. Unter die HDF-Platte wird ein mit Melaminharz imprägniertes Regeneratpapier, also ein Papier aus recycelten Fasern, gelegt. Dieser Pressgutstapel wird in der KT-Presse verpresst. Der Pressvorgang dauert 20 Sekunden und wird bei einem Druck von 40 N/mm² und einer Temperatur von 195 °C durchgeführt.

Nach Abschluss des Pressvorgangs und Abkühlen der in der KT-Presse erzeugten Verbundplatte wird die Haftung der Außenlage auf der Mittellage mit Hilfe des Gitterschnitttests nach DIN EN ISO 2409 geprüft. Sie war in allen Bereichen gut. In einer Beurteilungsskala von 1 (sehr gut) bis 5 (sehr schlecht) wurde im Durchschnitt eine 1-2 erreicht.

## Patentansprüche

1. Trägermaterial aufweisend ein mindestens einseitig aufgebrachtes Fixiermittel (4), auf das ein partikelförmiges Kunstharz (6) aufgebracht ist, **dadurch gekennzeichnet, dass** das Trägermaterial (2) ein Gelege, Gewebe, Gewirke oder eine Folie ist, insbesondere ein Vlies aus natürlichen und/oder synthetischen Fasern.

2. Trägermaterial nach Anspruch 1, **dadurch gekennzeichnet, dass** als Kunstharz ein duroplastisches Kunstharz aufgebracht ist, insbesondere ein Kunstharz aus der Gruppe, die Harnstoff-, Melamin-, Phenol-, Epoxydharz sowie deren Mischungen und Derivate umfasst.

3. Trägermaterial nach Anspruch 1 oder 2, **dadurch gekennzeichnet, dass** das partikelförmige Kunstharz (6) einen Durchmesser von 0,001 mm bis zu 1 mm aufweist.

4. Trägermaterial nach mindestens einem der vorstehenden Ansprüche, **dadurch gekennzeichnet, dass** das partikelförmige Kunstharz (6) in einer Menge von 10 g/m² bis 250 g/m² auf das Trägermaterial (2) aufgebracht ist.

5. Trägermaterial nach mindestens einem der vorstehenden Ansprüche, **dadurch gekennzeichnet, dass** das partikelförmige Kunstharz (6) in einer Schichtdicke von 10 µm bis zu 300 µm auf das Trägermaterial (2) aufgebracht ist.

6. Trägermaterial nach mindestens einem der vorstehenden Ansprüche, **dadurch gekennzeichnet, dass** als Fixiermittel (4) ein Haftmittel, insbesondere ein duroplastisches Kunstharz aufgebracht ist.

7. Trägermaterial nach mindestens einem der vorstehenden Ansprüche, **dadurch gekennzeichnet, dass** das Fixiermittel (4) auf beiden Seiten des Trägermaterials (2) aufgebracht ist.

8. Trägermaterial nach mindestens einem der vorstehenden Ansprüche, **dadurch gekennzeichnet, dass** das Fixiermittel (4) und das partikelförmige Kunstharz (6) aus demselben duroplastischen Kunstharz sind.

9. Trägermaterial nach mindestens einem der vorstehenden Ansprüche, **dadurch gekennzeichnet, dass** das Trägermaterial (2) mehrlagig ist.

10. Trägermaterial nach mindestens einem der vorstehenden Ansprüche, **dadurch gekennzeichnet, dass** es zur Armierung einer Platte, insbesondere einer Holzwerkstoffplatte oder zur Herstellung einer Verbundplatte eingesetzt wird.

11. Verfahren zum Herstellen eines Trägermaterials (2), das ein Fixiermittel (4) und partikelförmiges Kunstharz (6) aufweist, mit den Schritten:
- Bereitstellen des Trägermaterials (2),
- Aufbringen des Fixiermittels (4),
- Aufbringen, insbesondere Aufstreuen des partikelförmigen Kunstharzes (6), **dadurch gekennzeichnet, dass** das Trägermaterial (2) ein Gelege, Gewebe, Gewirke oder eine Folie ist, insbesondere ein Vlies aus natürlichen und/oder synthetischen Fasern.

12. Verfahren nach Anspruch 11, **dadurch gekennzeichnet, dass** das partikelförmige Kunstharz (6) nach dem Aufbringen am Fixiermittel (4) fixiert wird.

13. Verfahren nach Anspruch 11 oder 12, **dadurch gekennzeichnet, dass** das Trägermaterial (2) mit dem Fixiermittel (4) getränkt wird.

14. Verfahren nach mindestens einem der Ansprüche 11 bis 13, **dadurch gekennzeichnet, dass** das Fixiermittel (4) nach dem Aufbringen getrocknet wird.

## Claims

1. A substrate having a fixing agent (4) applied to at least one side, to which a particulate synthetic resin (6) is applied, **characterized in that** the substrate (2) is a laminated fabric, woven fabric, knitted fabric or a film, in particular a nonwoven fabric made of natural and/or synthetic fibers.

2. The substrate according to claim 1, **characterized in that** a thermosetting synthetic resin is applied as a synthetic resin, in particular a synthetic resin from the group that comprises urea, melamine, phenol, epoxy resin as well as mixtures and derivatives thereof.

3. The substrate according to claim 1 or 2, **characterized in that** the particulate synthetic resin (6) has a diameter of 0.001 mm to 1 mm.

4. The substrate according to at least one of the preceding claims, **characterized in that** the particulate synthetic resin (6) is applied to the substrate (2) in a quantity of 10 g/m² to 250 g/m².

5. The substrate according to at least one of the preceding claims, **characterized in that** the particulate synthetic resin (6) is applied to the substrate (2) in a layer thickness of 10 µm to 300 µm.

6. The substrate according to at least one of the preceding claims, **characterized in that** an adhesive agent, in particular a thermosetting synthetic resin is applied as a fixing agent (4).

7. The substrate according to at least one of the preceding claims, **characterized in that** the fixing agent (4) is applied to both sides of the substrate (2).

8. The substrate according to at least one of the preceding claims, **characterized in that** the fixing agent (4) and the particulate synthetic resin (6) are made of the same thermosetting synthetic resin.

9. The substrate according to at least one of the preceding claims, **characterized in that** the substrate (2) is multilayered.

10. The substrate according to at least one of the preceding claims, **characterized in that** it is deployed to reinforce a board, in particular a composite wood board, or to produce a composite board.

11. A method for producing a substrate (2) which has a fixing agent (4) and particulate synthetic resin (6), having the steps of:
- providing the substrate (2),
- applying the fixing agent (4),
- applying, in particular spreading the particulate synthetic resin (6), **characterized in that** the substrate (2) is a laminated fabric, woven fabric, knitted fabric or a film, in particular a nonwoven fabric made of natural and/or synthetic fibers.

12. The method according to claim 11, **characterized in that** the particulate synthetic resin (6) is fixed following the application to the fixing agent (4).

13. The method according to claim 11 or 12, **characterized in that** the substrate (2) is soaked with the fixing agent (4).

14. The method according to at least one of claims 11 to 13, **characterized in that** the fixing agent (4) is dried following the application.

## Revendications

1. Matériau support présentant un fixateur (4) appliqué sur au moins un côté, sur lequel est appliquée une résine synthétique particulaire (6), **caractérisé en ce que** le matériau support (2) est un treillis, un tissu, un maillage ou une feuille, en particulier un non-tissé constitué de fibres naturelles et/ou synthétiques.

2. Matériau support selon la revendication 1, **caractérisé en ce qu'**une résine synthétique thermodurcissable est appliquée en tant que résine synthétique, en particulier une résine synthétique issue du groupe comportant la résine d'urée, la résine de mélamine, la résine phénolique, la résine époxy ainsi que des mélanges et des dérivés de celles-ci.

3. Matériau support selon la revendication 1 ou 2, **caractérisé en ce que** la résine synthétique particulaire (6) présente un diamètre de 0,001 mm à 1 mm.

4. Matériau support selon l'une au moins des revendications précédentes, **caractérisé en ce que** la résine synthétique particulaire (6) est appliquée dans une quantité de 10 g/m² à 250 g/m² sur le matériau support (2).

5. Matériau support selon l'une au moins des revendications précédentes, **caractérisé en ce que** la résine synthétique particulaire (6) est appliquée dans une épaisseur de couche de 10 µm à 300 µm sur le matériau support (2).

6. Matériau support selon l'une au moins des revendications précédentes, **caractérisé en ce qu'**un moyen adhésif, en particulier une résine synthétique thermodurcissable, est appliqué en tant que fixateur (4).

7. Matériau support selon l'une au moins des revendications précédentes, **caractérisé en ce que** le fixateur (4) est appliqué sur les deux côtés du matériau support (2).

8. Matériau support selon l'une au moins des revendications précédentes, **caractérisé en ce que** le fixateur (4) et la résine synthétique particulaire (6) sont constitués de la même résine synthétique thermodurcissable.

9. Matériau support selon l'une au moins des revendications précédentes, **caractérisé en ce que** le matériau support (2) est multicouche.

10. Matériau support selon l'une au moins des revendications précédentes, **caractérisé en ce que** celui-ci est utilisé pour le renforcement d'une plaque, en particulier d'une plaque de matière dérivée du bois ou pour la fabrication d'une plaque composite.

11. Procédé pour la fabrication d'un matériau support (2), lequel présente un fixateur (4) et une résine synthétique particulaire (6), avec les étapes suivantes :
- mise à disposition du matériau support (2),
- application du fixateur (4),
- application, en particulier dispersion de la résine synthétique particulaire (6),
**caractérisé en ce que** le matériau support (2) est un treillis, un tissu, un maillage ou une feuille, en particulier un non-tissé constitué de fibres naturelles et/ou synthétiques.

12. Procédé selon la revendication 11, **caractérisé en ce que** la résine synthétique particulaire (6) est fixée après application sur le fixateur (4).

13. Procédé selon la revendication 11 ou 12, **caractérisé en ce que** le matériau support (2) est imbibé avec le fixateur (4).

14. Procédé selon l'une au moins des revendications 11 à 13, **caractérisé en ce que** le fixateur (4) est séché après application.
